# EUROPEAN PATENT APPLICATION

(11) **EP 4 123 488 A1**
(43) Date of publication of application: **25.01.2023**
(21) Application number: 20933436.6
(22) Date of filing: 28.04.2020
(51) Int. Cl.: G06F 21/56

(54) **MALICIOUS INTRUSION DETECTION METHOD, APPARATUS, AND SYSTEM, COMPUTING DEVICE, MEDIUM, AND PROGRAM**

(71) Applicant: Siemens Aktiengesellschaft, 80333 München (DE)
(72) Inventor: LI, Rui, Beijing 100102 (CN)
(74) Representative: Isarpatent
(86) International application number: PCT/CN2020/087580
(87) International publication number: WO 2021/217449

(57) **Abstract**

The present application relates to a malicious intrusion detection method, apparatus, and system, a computing device, a medium, and a program. The malicious intrusion detection method comprises: configuring at least one honey folder in a target device, wherein the honey folder is attractive to an attacker, and the honey folder does not comprise any file useful to a user; monitoring whether there is a visitor accessing the honey folder; and determining, according to whether there is a visitor accessing the honey folder, whether the target device is maliciously invaded.

## Description

### Technical field

The present disclosure relates generally to the technical field of computer network security, in particular to a malicious intrusion detection method and apparatus, a computing device, a medium and a computer program.

### Background art

Network security is becoming more and more important in our everyday lives. There are currently a number of network security solutions, such as firewalls, anti-virus software and intrusion detection systems, for preventing attacks on host equipment. However, these solutions can only detect or prevent some of the known attacks.

Honeypot systems are designed to collect information from attackers by simulating systems that are vulnerable to attack. A honeypot system provides a system that attracts attention in order to record and analyse an attacker's activity. This can help use to understand the attacker's attack methods and behavior, and may even discover unknown weak points.

There are a number of honeypot systems at present which can monitor and analyse attacks. Some of these use a real computer and system to construct the honeypot; others use software to simulate a real system. Generally, a honeypot constructed using a real system has high interactivity and a high cost, whereas a pure software honeypot has low interactivity and a low cost. The main objectives of most of these honeypot systems are hacker attacks and collection of information, and they are unable to help us in systems in everyday use; examples are the existing honeypot systems Capture-HPC, HoneyMonkey, SpyProxy, PhoneyC, etc.

Some existing patent applications, such as patent documents 1 and 2 listed below, use a honeypot system that combines a predefined physical honeypot and a virtual honeypot. However, they only pay attention to how to allocate work, and such honeypot systems are not used for everyday work systems.

Systems in everyday use may include various types of antivirus software. Anti-virus software can protect a system from the threat of viruses to a certain extent, but malicious users will still enter the system without notification.

Reference documents:
Patent document 1: CN 200610169676.9, "Multi-level honeynet data transmission method and system";
patent document 2: CN 200910136094.4, "Loophole simulation overload honeypot method".

### Summary of the invention

A brief summary of the present invention is presented below, in order to provide basic understanding of certain aspects of the present invention. It should be understood that this summary is not an exhaustive summary of the present invention. It is not intended to determine key or important parts of the present invention, nor to limit the scope thereof. Its purpose is purely to present certain concepts in simplified form, as a preamble to the more detailed description discussed below.

In view of the above, the present disclosure proposes a method for making the smallest change to a target device, and setting up a honey folder in the target device to detect malicious intrusive behavior. The malicious intrusion detection method according to the present disclosure is a low-cost method, which can be deployed on a device having only limited resources, and will not take up an excessive amount of CPU and internal memory resources of the device. The malicious intrusion detection method and apparatus according to the present disclosure can detect whether someone tries to maliciously intrude on a target device when the owner of the target device leaves the device without locking it, and can detect unknown malicious attacks.

According to one aspect of the present disclosure, a malicious intrusion detection method is provided, comprising: setting at least one honey folder in a target device, the honey folder being attractive to an attacker and not including documents useful to a user; monitoring whether a visitor accesses the honey folder; and determining whether the target device is being maliciously invaded based on whether a visitor accesses the honey folder.

Optionally, in one example of the abovementioned aspect, the step of determining whether the target device is being maliciously invaded comprises: causing the target device to enter a conversation mode to ask the visitor to respond to at least one decision-making question, if it is detected that a visitor accesses the honey folder; and determining whether the target device is being maliciously invaded by the visitor according to a response of the visitor. The question interaction in the conversation mode can reduce the erroneous reporting rate in intrusion detection.

Optionally, in one example of the abovementioned aspect, the step of determining whether the visitor is intruding maliciously according to a response of the visitor comprises: using a decision tree method to determine whether the target device is being maliciously invaded by the visitor. Using a decision tree makes it possible to set an enquiry strategy systematically and purposefully, to further reduce the erroneous reporting rate in intrusion detection.

Optionally, in one example of the abovementioned aspect, the decision-making question is designed to simulate a question encountered by a user in a real operating system, and can distinguish between a malicious user and a normal user. It is thus possible to effectively prevent an attacker from discovering that the honey folder is not a folder used by a user, but is being used to detect an attack.

According to another aspect of the present disclosure, a malicious intrusion detection apparatus is provided, comprising: a honey folder setting unit, configured to set at least one honey folder in a target device, the honey folder being attractive to an attacker and not including documents useful to a user; a monitoring unit, configured to monitor whether a visitor accesses the honey folder; and a judgment unit, configured to determine whether the target device is being maliciously invaded based on whether a visitor accesses the honey folder.

Optionally, in one example of the abovementioned aspect, the judgment unit is further configured to: cause the target device to enter a conversation mode to ask the visitor to respond to at least one decision-making question, if it is detected that a visitor accesses the honey folder; and determine whether the target device is being maliciously invaded by the visitor according to a response of the visitor.

Optionally, in one example of the abovementioned aspect, the judgment unit is further configured to: use a decision tree method to determine whether the target device is being maliciously invaded by the visitor.

Optionally, in one example of the abovementioned aspect, the decision-making question is designed to simulate a question encountered by a user in a real operating system, and can distinguish between a malicious user and a normal user.

According to another aspect of the present disclosure, a malicious intrusion detection system is provided, comprising at least one target device and a monitoring device, wherein the malicious intrusion detection apparatus as described above is installed on the target device; the monitoring device monitors the at least one target device, and if the malicious intrusion detection apparatus determines that the target device is being maliciously invaded, the monitoring device issues an alert to the target device.

Optionally, in one example of the abovementioned aspect, the monitoring device further comprises a database, the database storing a decision-making question, the decision-making question being designed to simulate a question encountered by a user in a real operating system and being able to distinguish between a malicious user and a normal user.

According to another aspect of the present disclosure, a computing device is provided, comprising: at least one processor; and a memory coupled to the at least one processor, the memory being used to store instructions which, when executed by the at least one processor, cause the processor to perform the method as described above.

According to another aspect of the present disclosure, a non-transitory machine-readable storage medium is provided, storing executable instructions which, when executed, cause the machine to perform the method as described above.

According to another aspect of the present disclosure, a computer program is provided, comprising computer-executable instructions which, when executed, cause at least one processor to perform the method as described above.

According to another aspect of the present disclosure, a computer program product is provided, tangibly stored on a computer-readable medium and comprising computer-executable instructions which, when executed, cause at least one processor to perform the method as described above.

The malicious intrusion detection method according to the present disclosure is a low-cost method, which can be deployed on a device having only limited resources, and will not take up an excessive amount of CPU and internal memory resources of the device. The malicious intrusion detection method and apparatus according to the present disclosure can detect whether someone tries to maliciously intrude on a target device when the owner of the target device leaves the device without locking it, and can detect unknown malicious attacks.

The method according to the present disclosure may be used to protect a device in everyday use, minimizing the risk to the target device, which may be a personal computer or any network communication device. The method according to the present disclosure is especially suitable for scenarios in which it is desired to protect data without installing too much software in the system and thereby increasing the load on system resources.

### Brief description of the drawings

The above and other objectives, characteristics and advantages of the present invention will be understood more easily with reference to the following description of embodiments of the present invention in conjunction with the drawings. The components in the drawings are merely intended to show the principles of the present invention. In the drawings, identical or similar technical features or components are indicated with identical or similar reference labels.
Fig. 1 is a flow chart showing an exemplary process of a malicious behavior detection method according to one embodiment of the present invention.
Fig. 2 is a flow chart showing an exemplary process of step S106 in Fig. 1.
Fig. 3 is a flow chart showing an exemplary process of using a decision tree method to determine whether a target device is being maliciously invaded according to another embodiment of the present invention.
Fig. 4 is a block diagram showing an exemplary configuration of a malicious intrusion detection apparatus according to another embodiment of the present disclosure.
Fig. 5 shows a schematic block diagram of a malicious intrusion detection system according to an embodiment of the present disclosure; and
Fig. 6 shows a block diagram of a computing device realizing the malicious intrusion detection method according to embodiments of the present disclosure.

### Key to the drawings

100: malicious behavior detection method
S101, S104, S106, S1062, S1064, S301, S302, S303, S304, S305, S306, S307, S308: steps
300: decision tree method
400: malicious intrusion detection apparatus
402: honey folder setting unit
404: monitoring unit
406: judgment unit
500: malicious intrusion detection system
502: target device
504: monitoring device
5042: database
600: reading device
602: processor
604: memory

### Detailed description of embodiments

The subject matter described herein is now discussed with reference to exemplary embodiments. It should be understood that these embodiments are discussed purely in order to enable those skilled in the art to better understand and thereby implement the subject matter described herein, without limiting the protection scope, suitability or examples expounded in the claims. The functions and arrangement of the elements discussed may be changed without departing from the protection scope of the content of the present disclosure. All of the examples may omit, replace or add various processes or components as needed. For example, the method described may be performed in a different order from that described, and all of the steps may be added, omitted or combined. Furthermore, features described in relation to some examples may also be combined in other examples.

As used herein, the term "comprises" and variants thereof denote open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, whether explicit or implicit. Unless explicitly specified in the context, the definition of a term is the same throughout the specification.

In the present disclosure, a method for using a honey folder to detect malicious intrusion is proposed, for identifying malicious intrusion behavior in systems that we use every day.

A conventional information leakage detection system or intrusion detection system needs software to continuously monitor resources on the protected target device; this will take up a large amount of resources, and it may even be impossible to provide a normal service. In some cases, resources such as the CPU and internal memory are of critical importance; the system is unable to tolerate high occupancy of the CPU or internal memory, and may even be unable to be used normally.

The present disclosure proposes a method for making the smallest change to a target device, and setting up a honey folder in the target device to detect malicious intrusive behavior.

The malicious intrusion detection method and apparatus according to embodiments of the present disclosure are described below with reference to the drawings.

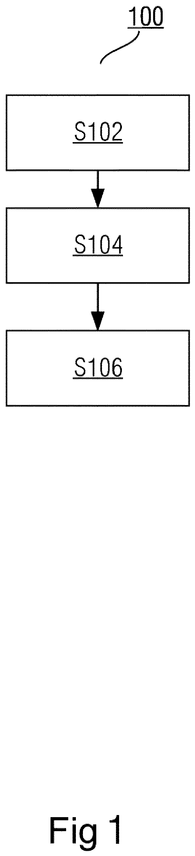

Fig. 1 shows a flow chart of an exemplary process of a malicious behavior detection method 100 according to one embodiment of the present invention.

In Fig. 1, step S102 is performed first: setting at least one honey folder in a target device.

The honey folder is a folder that is attractive to an attacker, and may contain attractive resources; in normal use, a user would not access the honey folder. In the present disclosure, the honey folder does not include data used by the user, and does not include resources useful to the user such as item files. Thus, there is a possibility that a visitor entering this folder is malicious. Files which look like source code, password files, private pictures, private keys, database files, etc., which are attractive to an attacker but actually not used by the user, are stored under the honey folder, and called "honey files".

The target device may be any network communication product or component that might suffer a malicious attack, such as a personal computer or server, etc.

In step S104, monitoring is performed to determine whether a visitor accesses the honey folder.

In the present disclosure, the specific monitoring method used is not defined; those skilled in the art may use a common method in the prior art to monitor whether a visitor accesses the honey folder.

For example, a monitoring program may be run on the protected target device to monitor whether a visitor accesses the honey folder. The monitoring program only monitors the honey folder; compared with ordinary monitoring program solutions such as anti-virus software, this only consumes a very small amount of resources of the target device.

In step S106, based on whether a visitor accesses the honey folder, a determination is made as to whether the target device is being maliciously invaded.

As stated above, the honey folder is a folder of a non-existent user or a folder of a non-existent item, and a normal user would not enter this folder; thus, in one example, if a visitor accesses this honey folder, it can be determined that the target device is being maliciously invaded.

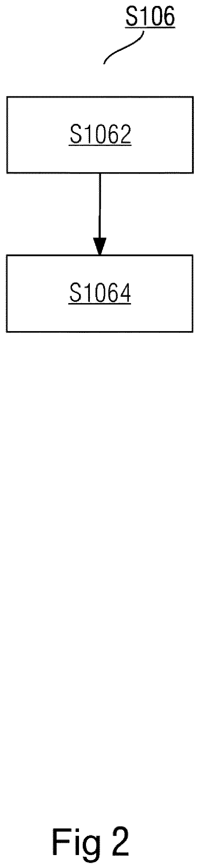

Fig. 2 shows a flow chart of an exemplary process of step S106 in Fig. 1.

As shown in Fig. 2, in sub-step S1062, if it is detected that a visitor accesses the honey folder, the target device is caused to enter a conversation mode, and the visitor is asked to respond to at least one decision-making question.

If a person or a program accesses a folder, the monitoring program will cause the target device to enter a special interaction mode. For example, in the Linux system, some special shell command lines appear, asking the visitor to respond to some decision-making questions; in the Windows system, a conversation window can pop up, to ask the visitor questions.

The decision-making questions used are like placing the visitor at a crossroads; a malicious user and a normal user will choose different roads. Preferably, the answers to these decision-making questions are generally "yes" or "no". The decision-making questions are designed to simulate questions that a user might encounter when accessing a folder in a real operating system, and can distinguish between a malicious user and a normal user. For example:
- This folder belongs to another user, do you want control?
- Do you want to reset the password?
- Do you want to delete the access record?
- Display hidden files?
- Please input the password (if there is no password, any input is acceptable)
- ...

In sub-step S1064, based on the responses of the visitor, a determination is made as to whether the target device is being maliciously invaded by the visitor.

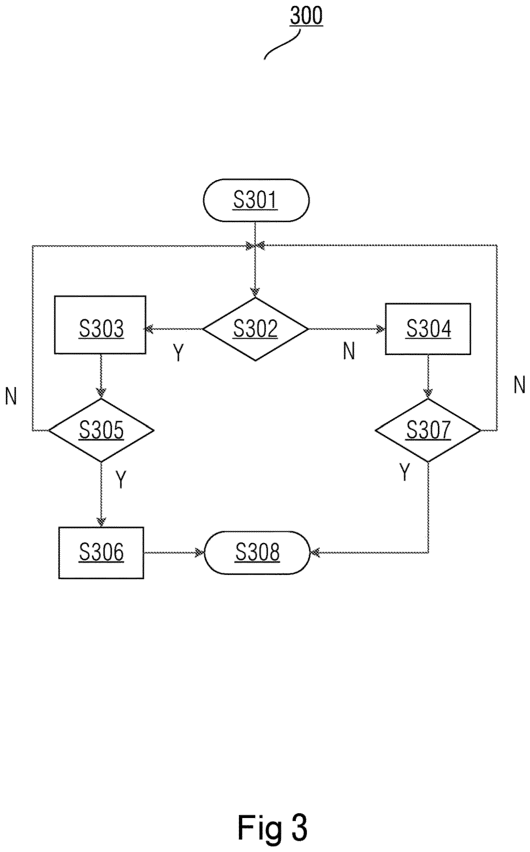

In one example, a decision tree method as shown in Fig. 3 may be used to judge whether the target device is being maliciously invaded by the visitor.

An exemplary process of determining whether the target device is being maliciously invaded when it is detected that a visitor accesses the honey folder is described below with reference to Fig. 3.

Firstly, in step S301, it is detected that a visitor accesses the honey folder; in step S302, the target device is caused to enter a conversation mode, and the visitor is asked to respond to a decision-making question; here, a malice value indicating the visitor's degree of malice can be set, and initialized to 0. The malice value is changed according to the visitor's response to each decision-making question; if the response is yes (Y), the operation of step S303 is performed, increasing the malice value; if the response is no (N), the operation of step S304 is performed, decreasing the malice value. After performing the step of increasing the malice value in S303, step S305 is performed, judging whether the malice value is greater than a predetermined threshold; if the malice value is not greater than the predetermined threshold (N), then the method returns to step S302, and the visitor is asked to respond to the next decision-making question; if the malice value is greater than the predetermined threshold (Y), then step S306 is performed, sending an alert to the target device and determining that the visitor is maliciously intruding, and then step S308 is performed, ending the judgment. After performing the step of decreasing the malice value in S304, a judgment is made in step S307 as to whether the malice value is less than 0; if the malice value is not less than 0, the method returns to step S302, and the visitor is asked to respond to the next decision-making question; if the malice value is less than 0 or the visitor exits the folder, it is determined that the visitor is not maliciously intruding, and step S308 is performed, ending the judgment.

An exemplary process of determining whether the target device is being maliciously invaded in the method according to the present disclosure has been described above referring to Fig. 3 as an example, but those skilled in the art will understand that the method of determining whether the target device is being maliciously invaded is not limited to this specific process.

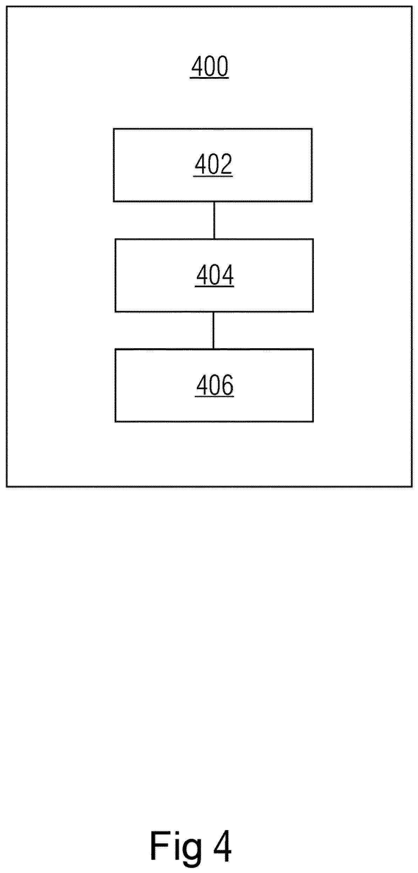

Fig. 4 is a block diagram showing an exemplary configuration of a malicious intrusion detection apparatus 400 according to another embodiment of the present disclosure.

As shown in Fig. 4, the malicious intrusion detection apparatus 400 comprises a honey folder setting unit 402, a monitoring unit 404 and a judgment unit 406.

The honey folder setting unit 402 is configured to set at least one honey folder in a target device; the honey folder is attractive to an attacker, and does not include documents useful to a user.

The monitoring unit 404 is configured to monitor whether a visitor accesses the honey folder.

The judgment unit 406 is configured to determine whether the target device is being maliciously invaded, based on whether a visitor accesses the honey folder.

The judgment unit 406 is further configured to: cause the target device to enter a conversation mode to ask the visitor to respond to at least one decision-making question, if it is detected that a visitor accesses the honey folder; and determine whether the target device is being maliciously invaded by the visitor according to the visitor's response.

The judgment unit 406 is further configured to: use a decision tree method to determine whether the target device is being maliciously invaded by the visitor.

The decision-making question is designed to simulate a question encountered by a user in a real operating system, and can distinguish between a malicious user and a normal user.

The details of the functions and operations of the various parts of the malicious intrusion detection apparatus 400 shown in Fig. 4 may for example be the same as or similar to those of the relevant parts in the embodiments of the malicious intrusion detection method 100 of the present disclosure described with reference to Figs. 1 - 3, and are not described in detail again here.

It must also be explained that the structure of the malicious intrusion detection apparatus 400 and the component units thereof shown in Fig. 4 are merely exemplary, and those skilled in the art may amend the structural block diagram shown in Fig. 4 as required.

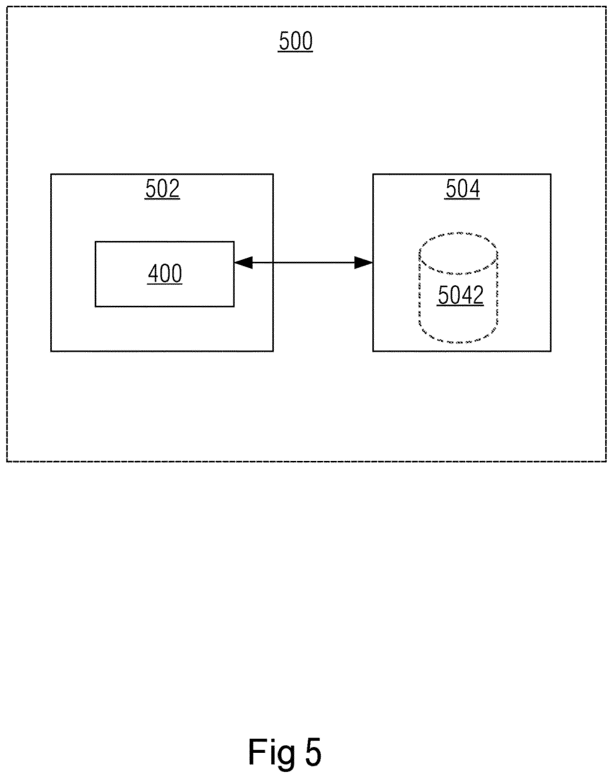

In the solution of the present disclosure described above, the malicious intrusion detection apparatus is set on the target device to monitor whether the target device is being maliciously invaded, but it is also possible to set a monitoring device to perform collective monitoring of multiple target devices; this is described in detail below with reference to Fig. 5.

Fig. 5 shows a schematic block diagram of a malicious intrusion detection system 500 according to an embodiment of the present disclosure.

The malicious intrusion detection system 500 shown in Fig. 5 comprises at least one target device 502 and a monitoring device 504.

The malicious intrusion detection apparatus 400 as described above is installed on the target device 502.

The monitoring device 504 monitors the at least one target device 502; if the malicious intrusion detection apparatus 400 determines that the target device 502 is being maliciously invaded, the monitoring device 504 issues an alert to the target device 502.

The monitoring device 504 comprises a database 5042, and decision-making questions are stored in the database 5042; the decision-making questions are designed to simulate questions encountered by a user in a real operating system, and can distinguish between a malicious user and a normal user.

Fig. 5 shows a block diagram of a system in which one monitoring device performs collective monitoring of target devices; the monitoring device comprises one database, in which identical or different decision-making questions set for different target devices may be stored. Although only one target device is shown in Fig. 5, those skilled in the art will understand that the number of target devices is not limited to one, and may be any plural number.

Embodiments of the malicious intrusion detection method, apparatus and system according to embodiments of the present disclosure have been described above with reference to Figs. 1 - 5. The malicious intrusion detection apparatus described above may be implemented using hardware, or may be implemented using software or a combination of hardware and software.

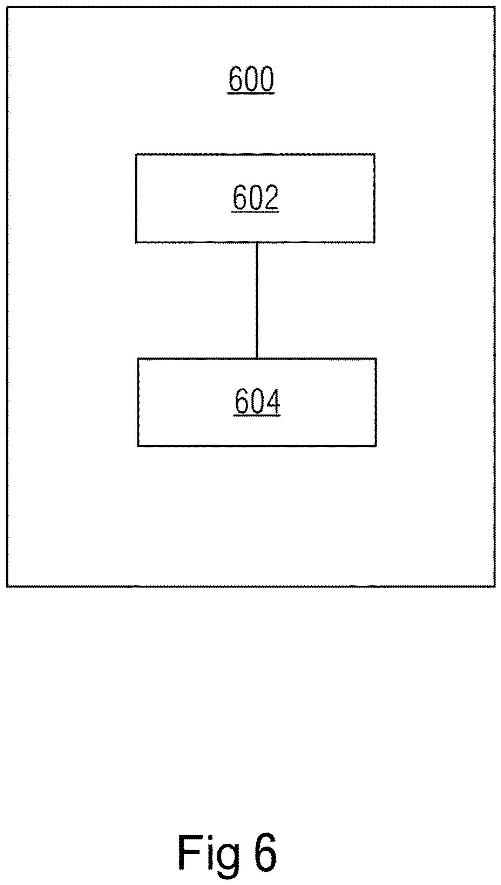

Fig. 6 shows a block diagram of a computing device 600 of the malicious intrusion detection method according to embodiments of the present disclosure. According to an embodiment, the computing device 600 may comprise at least one processor 602; the processor 602 executes at least one computer-readable instruction (i.e. the abovementioned element realized in the form of software) encoded or stored in a computer-readable storage medium (i.e. a memory 604).

In one embodiment, computer-executable instructions are stored in the memory 604; when executed, these instructions cause at least one processor 602 to perform the malicious intrusion detection method described above with reference to Figs. 1 - 3.

It should be understood that when executed, the computer-executable instructions stored in the memory 604 cause at least one processor 602 to perform the various operations and functions described above with reference to Figs. 1 - 5 in the embodiments of the present disclosure.

According to an embodiment, a non-transitory machine-readable medium is provided. The non-transitory machine-readable medium may have machine-executable instructions (i.e. the abovementioned element realized in the form of software); when executed by a machine, these instructions cause the machine to perform the various operations and functions described above with reference to Figs. 1 - 3 in the embodiments of the present disclosure.

According to an embodiment, a computer program is provided, comprising computer-executable instructions which, when executed, cause at least one processor to perform the various operations and functions described above with reference to Figs. 1 - 3 in the embodiments of the present disclosure.

According to an embodiment, a computer program product is provided, comprising computer-executable instructions which, when executed, cause at least one processor to perform the various operations and functions described above with reference to Figs. 1 - 3 in the embodiments of the present disclosure.

The malicious intrusion detection method according to the present disclosure is a low-cost method, which can be deployed on a device having only limited resources, and will not take up an excessive amount of CPU and internal memory resources of the device. The malicious intrusion detection method and apparatus according to the present disclosure can detect whether someone tries to maliciously intrude on a target device when the owner of the target device leaves the device without locking it, and can detect unknown malicious attacks.

The method according to the present disclosure may be used to protect a device in everyday use, minimizing the risk to the target device, which may be a personal computer or any network communication device. The method according to the present disclosure is especially suitable for scenarios in which it is desired to protect data without installing too much software in the system and thereby increasing the load on system resources.

The specific embodiments expounded above with reference to the drawings have described exemplary embodiments, but do not indicate all embodiments that can be implemented or that fall within the scope of protection of the claims. The term "exemplary" used throughout this specification means "used as an example, instance or illustration", and does not mean "preferred" or "advantageous" compared with other embodiments. The specific embodiments include specific details, in order to provide an understanding of the technologies described. However, these technologies can be implemented without these specific details. In some instances, to avoid making the concepts of the described embodiments difficult to understand, well known structures and apparatuses are shown in the form of block diagrams.

The above description of the content of the present disclosure is provided to enable any person skilled in the art to implement or use the content of the present disclosure. To a person skilled in the art, various amendments to the content of the present disclosure will be obvious, and the general principles defined herein can be applied to other variants without departing from the scope of protection of the content of the present disclosure. Thus, the content of the present disclosure is not limited to the examples and designs described herein, but is consistent with the broadest scope in conformity with the principles and novel features disclosed herein.

## Claims

1. A malicious intrusion detection method, comprising:
setting at least one honey folder in a target device, the honey folder being attractive to an attacker and not including documents useful to a user;
monitoring whether a visitor accesses the honey folder; and
determining whether the target device is being maliciously invaded based on whether a visitor accesses the honey folder.

2. The method as claimed in claim 1, wherein the step of determining whether the target device is being maliciously invaded comprises:
causing the target device to enter a conversation mode to ask the visitor to respond to at least one decision-making question, if it is detected that a visitor accesses the honey folder; and
determining whether the target device is being maliciously invaded by the visitor according to a response of the visitor.

3. The method as claimed in claim 2, wherein the step of determining whether the target device is being maliciously invaded by the visitor according to a response of the visitor comprises: using a decision tree method to determine whether the target device is being maliciously invaded by the visitor.

4. The method as claimed in any one of claims 1 - 3, wherein the decision-making question is designed to simulate a question encountered by a user in a real operating system, and can distinguish between a malicious user and a normal user.

5. A malicious intrusion detection apparatus (400), comprising:
a honey folder setting unit (402), configured to set at least one honey folder in a target device, the honey folder being attractive to an attacker and not including documents useful to a user;
a monitoring unit (404), configured to monitor whether a visitor accesses the honey folder; and
a judgment unit (406), configured to determine whether the target device is being maliciously invaded based on whether a visitor accesses the honey folder.

6. The apparatus (400) as claimed in claim 5, wherein the judgment unit (406) is further configured to:
cause the target device to enter a conversation mode to ask the visitor to respond to at least one decision-making question, if it is detected that a visitor accesses the honey folder; and
determine whether the target device is being maliciously invaded by the visitor according to a response of the visitor.

7. The apparatus (400) as claimed in claim 6, wherein the judgment unit (406) is further configured to: use a decision tree method to determine whether the target device is being maliciously invaded by the visitor.

8. The apparatus (400) as claimed in any one of claims 5 - 7, wherein the decision-making question is designed to simulate a question encountered by a user in a real operating system, and can distinguish between a malicious user and a normal user.

9. A malicious intrusion detection system (500), comprising at least one target device (502) and a monitoring device (504),
wherein the malicious intrusion detection apparatus (400) as claimed in any one of claims 5 - 8 is installed on the target device;
the monitoring device (504) monitors the at least one target device (502), and if the malicious intrusion detection apparatus (400) determines that the target device (502) is being maliciously invaded, the monitoring device (504) issues an alert to the target device (502).

10. The system (500) as claimed in claim 9, wherein the monitoring device (504) further comprises a database (5042), the database (5042) storing a decision-making question, the decision-making question being designed to simulate a question encountered by a user in a real operating system and being able to distinguish between a malicious user and a normal user.

11. A computing device (600), comprising:
at least one processor (602); and
a memory (604) coupled to the at least one processor (602), the memory being used to store instructions which, when executed by the at least one processor (602), cause the processor (602) to perform the method as claimed in any one of claims 1 - 4.

12. A non-transitory machine-readable storage medium, storing executable instructions which, when executed, cause the machine to perform the method as claimed in any one of claims 1 - 4.

13. A computer program, comprising computer-executable instructions which, when executed, cause at least one processor to perform the method as claimed in any one of claims 1 - 4.

14. A computer program product, tangibly stored on a computer-readable medium and comprising computer-executable instructions which, when executed, cause at least one processor to perform the method as claimed in any one of claims 1 - 4.
